# EUROPEAN PATENT APPLICATION

(11) **EP 1 052 220 A2**
(43) Date of publication of application: **15.11.2000**
(21) Application number: 00303966.6
(22) Date of filing: 11.05.2000
(51) Int. Cl.: C01B 13/11, C02F 1/72, B01J 19/08

(54) **Equipment for generating ionized gas using high-voltage discharge**

(30) Priority: 13.05.1999 KR 9917155
(71) Applicant: 21 Century Environment Co. Ltd., Suwon, Kyeungi-do (KR)
(72) Inventor: Yoon, Myung Youl, Chungchengbuk-do (KR); Moon, Chul Soo, Kumwang-up, Umseng-gun, Chungchongbuk-do (KR)
(74) Representative: Stonehouse, Sidney William

(57) **Abstract**

The present invention provides a generating equipment for ionized gas using high-voltage discharge, and more particularly, a generating equipment for ionized gas, which effectively generates ionized gas without using another chemical substance, biological means, or complicated equipment such as an ozonizer, thereby reducing the manufacturing cost of equipment and the disposal cost of air/wastewater.

The generating equipment for ionized gas of the present invention comprises a housing (11), and first electrodes (16) and second electrodes (17) arranged inside the housing. In the housing, an air inlet (12) and an ionized gas outlet (13) are formed, the first electrodes and the second electrodes arranged inside the housing containing the air, and the first electrodes are wrapped in insulating nonconductors (18). The first electrodes (16) are inserted and disposed in the second electrodes (17), and between the first and second electrodes, the high-voltage is applied. In the generating equipment for ionized gas of the present invention, the air which flows into the housing (11) is ionized by electrons discharged between the first and second electrodes, and contains oxidized gas components, resulting in being cleaned. If the cleaned air is made to flow out of the housing and pass into wastewater, the high molecular compounds of the wastewater are converted into the low molecular compounds by a process of decomposition and ionization and are purified directly. Thus, the generating equipment for ionized gas of the present invention can greatly reduce the manufacturing cost of equipment and the disposal cost of air/wastewater.

To be accompanied when published by Figure 1 of the drawings.

## Description

### BACKGROUND OF THE INVENTION

### 1. Field of the Invention

The present invention relates to a generating equipment for ionized gas using high-voltage discharge, and more particularly, to a generating equipment for ionized gas, which effectively generates ionized gas without using another chemical substance, biological means, or complicated equipment such as ozonizer, thereby reducing the manufacturing cost of equipment and the disposal cost of air/wastewater.

### 2. Description of the Related Art

At present, environmental pollution is a very serious problem that threatens to the human existence, and it has become a primary concern for all mankind in the world. Especially, among the environmental pollution, air pollution inflicts not only direct harm on the health of the mankind as a major reason for making the earth warmer or bringing about El Ni-no phenomenon that has caused worldwide meteorological abnormality recently, but great damage on the ecosystem.

As a way to solve one of the above problems of the air pollution, various systems for electrically removing the pollutants in the atmosphere have been developed. The electrical removal is an effective technique to remove the pollutants of particle type from the air, and the pollutant particles can be removed from the air by passing the polluted air through an electromagnetic air filter. However, in this system, a problem that an offensive odor smelling of rotten tobaccos and causing one to have the feeling of a symptom of diaphoresis does harm to a human body occurs.

Apart from this, an ozonizer, which is effective in oxidizing the maceral of the pollutant by supplying ozone to the air, has been developed. However, as the ozonizer is very expensive equipment, the total of air cleaning is heavily increased.

On the other hand, water pollution is just as serious as the air pollution, so the protection of the water resources which are being gradually exhausted, has become an urgent problem for all the people over the world. To protect the water resources being essential to the human existence, it is important to protect the water resources of natural state themselves, but more important than that is to use the water resources effectively and savingly as well as to dispose or recycle sewage or wastewater.

When the sewage or the wastewater is thrown away or run to the natural world as it is without the disposal process, it will be mixed with the water resources themselves of natural state and has them as well as other environments polluted, resulting in bringing about a serious damage. Therefore, to prevent the occurrence of the environmental pollution problems, various efforts to dispose the sewage or the wastewater have been tried.

As a part of such efforts, various disposal equipment and methods have been developed as such a one as disclosed in the Korean Patent Laid-open No. 96-34103(Method for Decolorizing Disposal of Dyed Wastewater Using Chlorine Compound and Electrolysis: hereinafter called as leading technology 1) or in the Korean Patent Laid-open No. 97-74670(Method and Equipment for Biological Disposal of Organic Wastewater Using High Purified Carrier: hereinafter called as leading technology 2).

However, the prior arts as mentioned above have various problems as follows. That is, in the chemical disposal method like the leading technology 1, because additional materials like chlorine compound such as hydrochloric acid, calcium chloride must be added into the wastewater to cause a chemical reaction, not only the cost of disposal is increased, but a risk may exist that an unexpected secondary pollution should occur by the chemical materials and the likes. Moreover, as it uses an ozonizer with ultraviolet lamps (UV lamps) to cause a chemical reaction, the entire cost of disposal of wastewater may increase.

Also, in the biological disposal method like the leading technology 2, because microorganisms are required for purification of water, not only the cost of them is increased but it needs additional facilities to cultivate the microorganisms.

To solve the above problems, in the Korean Patent Application No. 98-50538, filed on November 25, 1998 and by the applicant of the present invention, a generating equipment for ionized gas using high-voltage discharge is disclosed. Even though the above generating equipment for ionized gas does not require any additional chemical substances or biological means and has a simple structure, it can effectively generate the ionized gas. However, in the above generating equipment, to increase the efficiency of generation of ionized gas, the need for improving some parts of entire construction of the system arises.

### SUMMARY OF THE INVENTION

The present invention has been accomplished to solve the above described problems, and an object of it is to provide a generating equipment for ionized gas using high-voltage discharge, which has a simple structure without any additional equipment of complicated structure such as ozonizer, but nevertheless can effectively clean the pollutants in the atmosphere, thus reducing the manufacturing cost.

Another object of the present invention is to provide a generating equipment for ionized gas using high-voltage discharge, which is able to effectively purify sewage and wastewater such as livestock wastewater or garbage seepage water without any additional use of chemical substances or biological means, and perform a decolorization function.

To achieve the above objects, the present invention provides a generating equipment for ionized gas comprising:
a housing having an air inlet and an ionized gas outlet, whereinto the air is flowed through the air inlet;
second hollow electrodes arranged inside the housing containing the air; and
first electrodes inserted and disposed in the second electrodes arranged inside the housing which contains the air,
wherein high-voltage of at least 10,000V is applied between the first and second electrodes, the air is ionized while passing between the first and second electrodes, and an ionized gas is discharged out of the housing through the ionized gas outlet.

The first electrodes are wrapped in insulating nonconductors.
a generating equipment for ionized gas with the above structure can be effectively used for cleaning polluted air or disposing wastewater without necessitating any additional chemical reactive substances or biological materials such as microorganism, and also without necessitating any expensive equipment such as ozonizer with ultraviolet lamps.

### BRIEF DESCRIPTION OF THE DRAWINGS

Figure 1 is a block diagram of a generating equipment for ionized gas using high-voltage discharge according to a preferred embodiment of the present invention;
Figure 2a is a longitudinal sectional view of the second electrode of the discharge tubes shown in Figure 1; and
Figure 2b is a longitudinal sectional view showing a state that the first electrode is inserted into the second electrodes of Figure 2a.

### DETAILED DESCRIPTION OF THE PREFERRED EMBODIMENT

The generating equipment for ionized gas 10 using high-voltage discharge of the present invention will be described in more detail with reference to the preferred embodiment illustrated in the attached drawings.

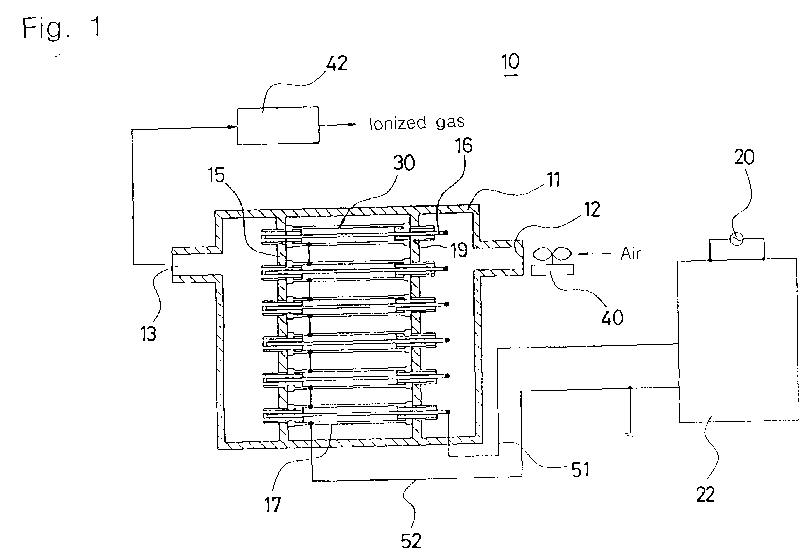

Figure 1 is a schematic block diagram of a generating equipment for ionized gas 10 using high-voltage discharge according to a preferred embodiment of the present invention. Referring to Figure 1, a generating equipment for ionized gas 10 using high-voltage discharge includes a housing 11 made of electrically perfect insulating material. The housing 11 has an air inlet 12 and an ionized gas outlet 13. Preferably, a first fan 40 is mounted on the air inlet 12 to blow air into the housing 11 with a predetermined pressure. In addition, a second fan 42 is mounted on the ionized gas outlet 13 to blow the air flowing out of the housing 11 into a desired place with a predetermined pressure.

The housing 11 further has a pair of partition walls 15, which extend across the inside thereof. The partition walls 15 have a plurality of insertion holes 19. A plurality of first and second electrodes 16 and 17 are arranged together through the insertion holes 19 inside the housing 11.

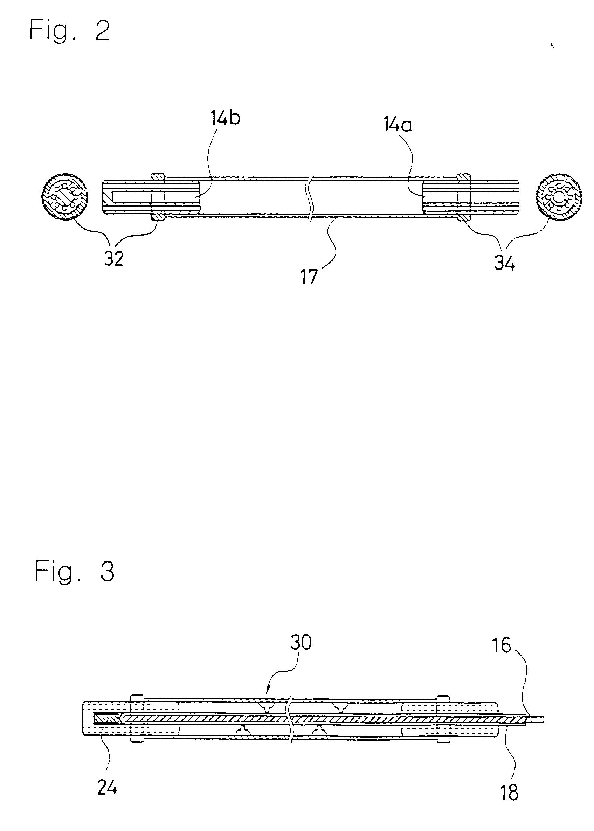

Figure 2a is a longitudinal sectional view of the second electrode of the discharge tube shown in Figure 1, and Figure 2b is a longitudinal sectional view showing a state that the first electrode is inserted into the second electrode of Figure 2a.

Referring to Figures 2a and 2b, the hollow second electrode 17 is made of a stainless pipe, and its both ends are engaged with a discharge tube's out-plug 32 and a discharge tube's in-plug 34. The out-plug 32 and in-plug 34 are insulators made of phenol resin or polypropylene resin. In the center of the out-plug 32 and the in-plug 34, through holes 14a and 14b are formed respectively such that they contain the first electrode 16 .

The first electrode 16 is a stainless bar with a diameter of about 3.5mm and wrapped in an insulating nonconductor 18. The insulating nonconductor 18 is made of a dielectric or an insulator such as glass, ceramic. Preferably, the insulating nonconductor 18 is made of glass. The first electrode 16, which is wrapped in the insulating nonconductor 18 of glass, is inserted in the through hole 14a of the discharge tube's in-plug 34, passes via the inside of the second electrode 17, and inserted in the through hole 14b of the discharge tube's out-plug 32. At this time, an insulating member 24 is arranged between the inserted end of the insulating nonconductor 18 wrapping the end portion of the first electrode 16 and the closed end of the through hole 14b.

With these structure, currents of electrons of high-density can be made between the first and second electrodes 16, 17. At this time, the distance I between the first and second electrodes 16, 17 is chosen depending on the voltage applied between the first and second electrodes 16 and 17, and it is preferable that the distance is 3 ∼ 10mm if the voltage is 12,000 ∼ 15,000V.

The first and second electrodes 16, 17 are connected to a power supply 20 by a first power supply lines 51 and the second supply lines via a transformer 22 for generating a high voltage. Accordingly, the high voltage is applied between the first and second electrodes 16,17.

Next, a preferred embodiment of the present invention, the application of a generating equipment for ionized gas 10 using high-voltage discharge according to an embodiment will be described.

First, a high-voltage is applied between the first and second electrodes 16, 17. by operating the transformer 22 connected to the power supply 20. Preferably, the applied voltage is about 12,000 ∼ 15,000V. At this time, electrons are discharged from the cathodes to the anodes by the high-voltage applied between the first and second electrodes 16, 17, but as shown in the drawing, in case that an AC voltage is applied, the electrons are discharged from both electrodes. Because the first electrodes 16 are arranged inside the second electrodes 17, the currents of electrons high-density is made between the first and second electrodes 16 and 17.

Then, the air is flowed into the housing 11 through the air inlet 12. While the air flowed into the housing 11 passes between the first and second electrodes 16, 17, the contaminated components in the air are cleaned by the action of the electrons discharged therebetween. That is, in the air flowed into the housing 11, ions such as OH-, 02-, and oxidized gas components such as ozone(O3), hydrogen dioxide(HO2) by the action of the discharged electrons.

The air cleaned inside the housing 11 is discharged through the ionized gas outlet 13, and thus ionized air containing the oxidized gas components can be used for the desired purposes through the second fan 42. Namely, the cleaned air may be directly used for cleaning an air or used as an oxidizing agent of substances.

Alternately, the cleaned air containing ions, oxidized gas components, or the likes may be used for purification of wastewater. In other words, the air forcedly blown into the housing 11 by the first fan 40 is cleaned as previously described, but if thus cleaned air is made to flow out of the housing 11 into a wastewater, the contaminated components in the wastewater consisted mainly of the high molecular carbon compounds are converted into low molecular materials such as inorganic compounds, by the action of collision, disturbance, dissociation or substitution with discharged electrons, thereby improving water quality. Alternately, in case that it is used as a purifying agent for wastewater, after having the purified air bubbled by a bubble generator like the conventional method, the wastewater is made to pass through it.

As described above, a generating equipment for ionized gas according to the present invention can produce ions and oxidized gas components such as O3 without necessitating expensive equipments such as ozonizer with ultraviolet lamps. In addition, as the generating equipment for ionized gas can clean the polluted air by using such components, there is an advantage of reducing cost of air cleaning. Further, it can be used for effectively purifying sewage and wastewater such as livestock wastewater or garbage seepage water without any additional use of chemical substances or biological means, and perform a decolorization function.

While the invention has been described with reference to a preferred embodiment thereof, it will be understood by those skilled in the art that various changes and modifications may be made to the invention without departing from the spirit and scope thereof.

## Claims

1. A generating equipment for ionized gas, characterised in that it comprises:
a housing (11) having an air inlet (12) and an ionized gas outlet (13), wherein said air is passed through said air inlet;
second hollow electrodes (17) arranged inside said housing (11) containing said air; and
first electrodes (16) inserted and disposed in said second electrodes (17) arranged inside said housing which contains said air,
wherein high-voltage of at least 10,000V is applied between said first and said second electrodes (16, 17), said air is ionized while passing between said first and said second electrodes, and an ionized gas is discharged out of said housing through said ionized gas outlet.

2. A generating equipment for ionized gas as set forth in claim 1, characterised in that said first electrodes (16) wrapped in insulating nonconductors (18) are inserted through holes (14a) of discharging tubes' in-plugs (34) engaged with ends of said second electrodes (17), and, after passing inside said second electrodes, are inserted through holes (14b) of discharging tubes' out-plugs (32) engaged with other ends of said second electrodes, while inside said through holes (14a) of discharging tubes' in-plugs (34) wherein, insulators (24) are interposed between the inserted outer ends of said insulating nonconductors (18) wrapping the ends of said first electrodes and the closed ends of said through holes (14a) of discharging tubes' in-plugs (34).

3. A generating equipment for ionized gas as set forth in claim 2, characterised in that the voltage applied between said first and second electrodes (16, 17) is 12,000- 15,000V, and the distance between said first and second electrodes is 3-10mm.

4. A generating equipment for ionized gas as set forth in any preceding claim characterised in that fans (40, 42) are connected disposed at said air inlet (12) and said ionized gas outlet (13) respectively.

5. A generating equipment for ionized gas as set forth in any preceding claim wherein said first and second electrodes (16, 17) are connected to a power supply (20) through first power supply lines (51) and second power supply lines (52) respectively, via a transformer (22) for generating high voltage.
